# EUROPÄISCHE PATENTSCHRIFT

(11) **EP 2 070 810 B1**
(45) Veröffentlichungstag und Bekanntmachung des Hinweises auf die Patenterteilung: **08.07.2015**
(21) Anmeldenummer: 08020958.8
(22) Anmeldetag: 03.12.2008
(51) Int. Cl.: B62J 15/02

(54) **Radschützer für ein Fahrrad**
Wheel protector for a bicycle
Protège roues pour un vélo

(30) Priorität: 08.12.2007 DE 102007059283; 18.06.2008 DE 102008028973
(43) Veröffentlichungstag der Anmeldung: 17.06.2009
(73) Patentinhaber: sks metaplast Scheffer-Klute GmbH, 59846 Sundern (DE)
(72) Erfinder: Grabski, Karsten, 58739 Wickede/Ruhr (DE); Krick, Peter, 59872 Meschede (DE); Kordes, Sven, 59846 Sundern (DE)
(74) Vertreter: Basfeld, Rainer

(56) Entgegenhaltungen:
- JP-A- 2005 041 361
- US-A1- 2004 227 323

## Beschreibung

Die vorliegende Erfindung betrifft einen Radschützer für ein Fahrrad gemäß dem Oberbegriff des Anspruchs 1.

Ein Radschützer der vorgenannten Art ist aus der US 2004/0227323 A1 bekannt. Der darin beschriebene Radschützer weist ein erstes, vorderes Teil und ein zweites, hinteres Teil auf, die über winkelförmige Verbindungsmittel miteinander verbunden sind. Die winkelförmigen Verbindungsmittel können in üblicher Weise mittels eines in der Gabel aufspreizbaren Klemmteils an dem Fahrrad befestigt werden. Die Verbindung des vorderen und des hinteren Teils des Radschützers an den Verbindungsmitteln erfolgt jeweils über arretierbare Gelenke, die jeweils ein Verschwenken des ersten und des zweiten Teils nach oben und nach unten ermöglichen.

Aus der JP 2005 041 361 A ist ebenfalls ein Vorderradschützer bekannt, der ein erstes, vorderes Teil und ein zweites, hinteres Teil aufweist. Diese Teile sind ebenfalls über winkelförmige Verbindungsmittel miteinander verbunden. Die winkelförmigen Verbindungsmittel können ebenfalls in üblicher Weise mittels eines in der Gabel aufspreizbaren Klemmteils an dem Fahrrad befestigt werden. An den winkelförmigen Verbindungsmitteln können das erste und das zweite Teil über jeweils ein Verlängerungsteil angebracht werden. Dabei kann während der Montage die Position des ersten und des zweiten Teils in Längsrichtung des Fahrrads in einem vorgegebenen Bereich variiert werden.

Ein weiterer Radschützer ist aus der DE 20 2007 000 820 U1 bekannt. Der darin beschriebene Vorderradschützer für ein Kinderrad weist zwei Winkelteile auf, von denen jeweils einer mit einem Teil des Radschützers verbindbar ist. Die beiden Winkelteile sind in unterschiedlichen Stellungen miteinander verbindbar, so dass der Radschützer zwei unterschiedliche Geometrien aufweisen kann. Die Winkelteile weisen jeweils ein Langloch auf, wobei diese Langlöcher im verbundenen Zustand zumindest soweit miteinander fluchten, dass sie eine Schraube aufnehmen können, mit der der Radschützer an dem Fahrrad angebracht und die Teile miteinander verbunden werden können. Somit wird bei dem Lösen des Radschützers von dem Fahrrad auch die Verbindung zwischen den beiden Teilen des Radschützers gelöst.

Ein weiterer Radschützer ist aus der EP 1 435 323 A1 bekannt. Der darin beschriebene Radschützer kann mittels einer Adaptereinrichtung an der Vorderradgabel angebracht werden. Der Radschützer ist im wesentlichen einstückig aus Kunststoff ausgebildet und weist eine langgestreckte Form mit einem stufenförmigen Versatz im Übergangsbereich von dem vorderen zu dem hinteren Teil des Radschützers auf. Dieser stufenförmige Versatz ermöglicht die Verwendung des Radschützers für eine einfedernde Vorderradgabel, weil im Bereich des stufenförmigen Versatzes ein vertikaler Abschnitt des Radschützers bei dem Einfedern der Vorderradgabel zwischen einer Gabelbrücke und einem Gabelkopf bewegt werden kann.

Als nachteilig bei diesem Stand der Technik erweist es sich, dass bei Zweirädern die Anordnungen von Gabelbrücken und Gabelköpfen nicht standardisiert sind. Insbesondere in den letzten Jahren sind eine Vielzahl von Federgabelmodellen für Fahrräder auf den Markt gekommen, die sich deutlich hinsichtlich der Anordnung der Gabelbrücken und Gabelköpfe bei einfedernden Vorderradgabeln unterscheiden. Der aus dem Stand der Technik gemäß EP 1 435 323 A1 bekannte Radschützer lässt sich nur noch bei wenigen der neuen Fahrradmodelle derart anbringen, dass ein Einfedern der Vorderradgabel möglich bleibt.

Das der vorliegenden Erfindung zugrunde liegende Problem ist die Schaffung eines Radschützers der eingangs genannten Art, der bei einer Mehrzahl unterschiedlicher Zweiräder verwendet werden kann und einfach handhabbar ist.

Dies wird durch einen Radschützer der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass die Verbindungsmittel derart gestaltet sind, dass das erste und das zweite Teil in zwei zueinander senkrechten Richtungen relativ zueinander positionierbar sind, so dass der Radschützer sowohl in vertikaler Richtung als auch in Längsrichtung des Fahrrads an die Gegebenheiten des Fahrrads angepasst werden kann. Durch die Arretierung kann der Benutzer den Radschützer einmal an die Gestaltung seines Fahrrads anpassen und dann die gewählte Geometrie des Radschützers so arretieren, dass sich die Geometrie im normalen Gebrauch oder auch bei der Abnahme des Radschützers nicht mehr verstellt. Alternativ kann eine derartige Anpassung an die Geometrie eines bestimmten Fahrradtyps bereits werksseitig bei dem Hersteller des Radschützers vorgenommen werden.

Durch die erfindungsgemäße Gestaltung kann der Radschützer sowohl in vertikaler Richtung als auch in Längsrichtung des Fahrrads an die Gestaltung und Anordnung der Gabelbrücke des Fahrrads angepasst werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Explosionsansicht einer ersten Ausführungsform eines erfindungsgemäßen Radschützers;
- Fig. 2: eine Seitenansicht des Radschützers gemäß Fig. 1;
- Fig. 3: eine Schnittansicht gemäß den Pfeilen III - III in Fig. 2;
- Fig. 4: eine Draufsicht auf den Radschützer gemäß Fig. 2;
- Fig. 5: eine Schnittansicht gemäß den Pfeilen V - V in Fig. 4;
- Fig. 6: eine Detailansicht gemäß dem Pfeil VI in Fig. 5;
- Fig. 7: eine Detailexplosionsansicht einer zweiten Ausführungsform eines erfindungsgemäßen Radschützers;
- Fig. 8: eine Seitenansicht des Radschützers gemäß Fig. 7;
- Fig. 9: eine Schnittansicht gemäß den Pfeilen IX - IX in Fig. 8;
- Fig. 10: eine Detailansicht gemäß dem Pfeil X in Fig. 7
- Fig. 11: eine Untenansicht gemäß dem Pfeil XI in Fig. 7.

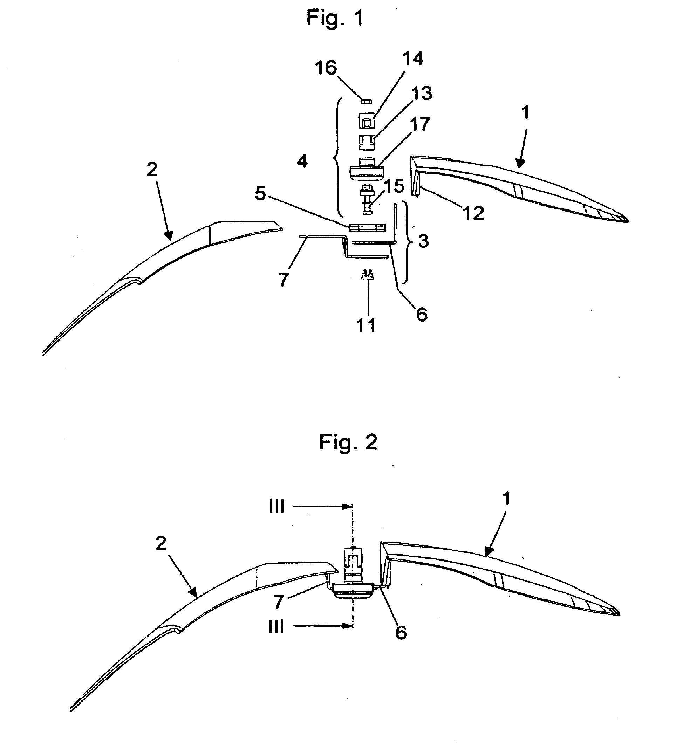

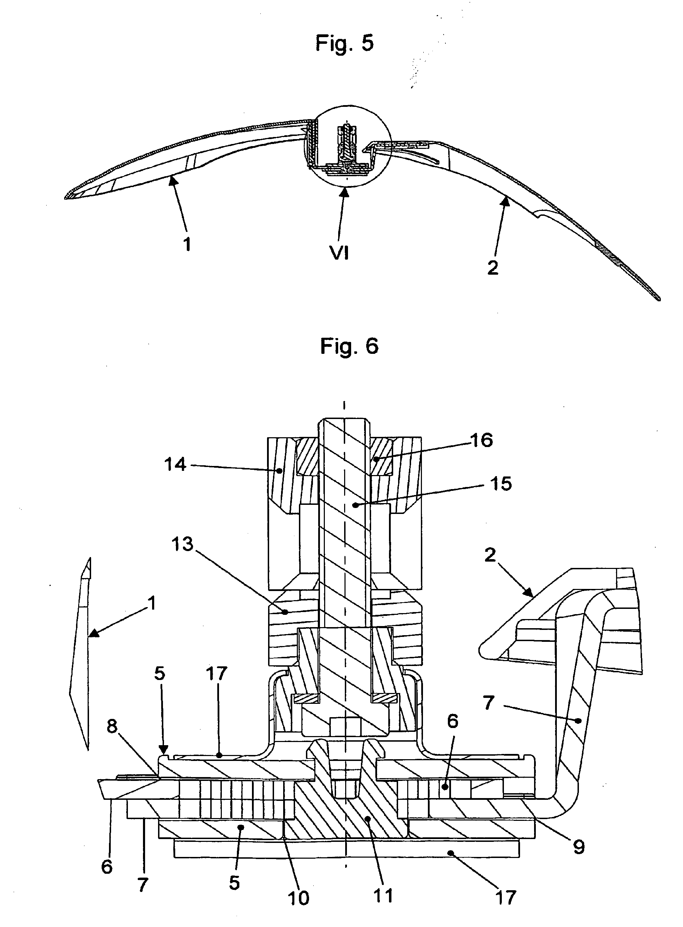

Aus Fig. 1 ist ersichtlich, dass ein erfindungsgemäßer Radschützer einen ersten, im Gebrauchszustand vorderen Teil 1, einen zweiten, im Gebrauchszustand hinteren Teil 2, Verbindungsmittel 3 und Adaptermittel 4 umfasst. Mit Hilfe der Verbindungsmittel 3 können die beiden Teile 1, 2 miteinander verbunden werden. Die Adaptermittel 4 dienen dazu, den Radschützer an einer Vorderradgabel eines Fahrrades zu befestigen. Beispielsweise Fig. 2 und Fig. 5 lässt sich entnehmen, dass der Radschützer in Gebrauchsstellung in Seitenansicht einen stufenförmigen Versatz zwischen dem ersten und dem zweiten Teil 1, 2 aufweist.

Die Verbindungsmittel umfassen ein erstes Verbindungsteil 5, ein erstes Befestigungselement 6 und ein zweites Befestigungselement 7, wobei die Befestigungselemente 6, 7 als ein- beziehungsweise zweimal abgewinkelte stegförmige Teile, wie beispielsweise Bleche ausgebildet sind. Das erste Verbindungsteil 5 ähnelt einer flachen beidseitig offenen Hülse, die auf jeder ihrer Stirnseiten jeweils eine als erste Aufnahmemittel dienende Aufnahme 8, 9 aufweist. Die in Gebrauchsstellung einander zugewandten Enden der Befestigungselemente 6, 7 können in die Aufnahmen 8, 9 des ersten Verbindungsteils 5 soweit eingeschoben werden, dass sie einander überlappen. Durch das Ausmaß der Überlappung der Befestigungsteile 6, 7 in dem ersten Verbindungsteil 5 kann der Abstand der Teile 1, 2 voneinander in Längsrichtung des Fahrrades vorgegeben werden.

Das erste Verbindungsteil 5 weist weiterhin eine als Arretierungsmittel dienende Arretieröffnung 10 auf, die sich in Gebrauchsstellung (siehe Fig. 2) von unten in das erste Verbindungsteil 5 hinein erstreckt. In diese Arretieröffnung 10 kann ein als Arretierungsmittel dienendes Arretierungsteil 11 hinein gesteckt werden (siehe Fig. 6), das die beiden Befestigungselemente 6, 7 aneinander und/oder an dem ersten Verbindungsteil 5 festlegen kann. Dazu weisen die in das erste Verbindungsteil 5 einbringbaren Enden der Befestigungsteile 6, 7 jeweils ein gezacktes Langloch auf, in das das Arretierungsteil 11 eingreifen kann.

Die in Gebrauchsstellung voneinander abgewandten Enden der Befestigungselemente 6, 7 sind mit dem ersten Teil 1 beziehungsweise dem zweiten Teil 2 verbunden.

Dabei ist die Verbindung zwischen dem ersten Befestigungselement 6 und dem ersten Teil 1 höhenverstellbar beziehungsweise erstreckt sich in Gebrauchsstellung in vertikaler Richtung. Dies wird dadurch realisiert, dass das erste Teil 1 eine sich in Gebrauchsstellung in vertikaler Richtung erstreckende, als zweite Aufnahmemittel dienende Aufnahme aufweist, in die das entsprechende Ende des ersten Befestigungsteils 6 mehr oder weniger weit eingeschoben werden kann. Die Festlegung des Endes des ersten Befestigungsteils 6 in der gewünschten Position kann durch eine Rastzunge gewährleistet werden. Die Höhenverstellung zwischen erstem Befestigungselement 6 und erstem Teil 1 gewährleistet eine Höhenverstellung zwischen erstem und zweitem Teil 1, 2.

Die Verbindung zwischen dem zweiten Befestigungselement 7 und dem zweiten Teil 2 ist in dem abgebildeten Ausführungsbeispiel nicht höhenverstellbar. Es besteht aber durchaus auch die Möglichkeit, auch diese Verbindung höhenverstellbar auszubilden. Das zweite Teil 2 weist bei dem abgebildeten Ausführungsbeispiel eine sich in Gebrauchsstellung in horizontaler Richtung erstreckende Ausnehmung auf, in die das entsprechende Ende des zweiten Befestigungselements 7 eingebracht und per Kraft- oder Formschluss festgelegt werden kann.

Der in Gebrauchsstellung vordere beziehungsweise erste Teil 1 des Radschützers weist auf seiner dem zweiten Teil 2 zugewandten Seite einen vertikalen Abschnitt 12 auf. Dieser vertikale Abschnitt 12 kann in an sich bekannter Weise (siehe EP 1 435 323 A2) bei eingefederter Vorderradgabel zwischen der Vorderradgabel oder einem an dieser angeordneten Gabelkopf und einer Gabelbrücke angeordnet sein.

Die Adaptermittel 4 verfügen ebenfalls in an sich bekannter Weise (siehe EP 1 435 323 A2) über Klemmmittel, die in das Innere einer Vorderradgabel eingebracht und aufgespreizt werden können. Im abgebildeten Ausführungsbeispiel sind zwei ineinander greifende Spreizelemente 13, 14 vorgesehen, die innen konische Flächen aufweisen, die bei einem Ineinander-Drücken der Spreizelemente 13, 14 ein Aufspreizen bewirken. Die Spreizelemente 13, 14 werden dabei durch eine Schraube 15 und eine Mutter 16 zusammengedrückt, wobei der Kopf der Schraube 15 an einem Anschlag anliegen kann, der in einem ebenfalls von den Adaptermitteln 4 umfassten zweiten Verbindungsteil 17 ausgebildet ist.

Das zweite Verbindungsteil 17 weist Rastmittel auf, die ein Anklipsen des zweiten Verbindungsteils 17 an das erste Verbindungsteil 5 erlauben. Die Klemmmittel können in dem Inneren der Vorderradgabel festgelegt werden, wobei dann das zweite Verbindungsteil 17 über die Schraube 15 an den Klemmmitteln befestigt ist. Auf diese Weise sind die kompletten Adaptermittel 4 an der Vorderradgabel festgelegt. Die Adaptermittel 4 können auch dann an der Vorderradgabel verbleiben, wenn das erste und das zweite Teil 1, 2 sowie die Verbindungsmittel 3 von dem Benutzer abgenommen werden. Durch das Anklipsen des ersten Verbindungsteils 5 an das zweite Verbindungsteil 17 wird eine Verbindung zwischen den Adaptermitteln 4 einerseits und der Einheit aus erstem Teil 1, zweitem Teil 2 und Verbindungsmitteln 3 andererseits hergestellt.

Die Einheit aus erstem Teil 1, zweitem Teil 2 und Verbindungsmitteln 3 kann von dem Benutzer oder auch vom Hersteller werksseitig an die Geometrie des entsprechenden Fahrrades angepasst und vormontiert werden. Dabei dienen zur Anpassung an die Geometrie des Fahrrades die Höhenverstellbarkeit der Verbindung zwischen erstem Teil 1 und erstem Befestigungselement 6 sowie die Verstellbarkeit in horizontaler Richtung zwischen erstem und zweitem Teil 1, 2 über das Ausmaß der Überlappung zwischen erstem und zweitem Befestigungselement 6, 7 in dem ersten Verbindungsteil 5. Die an die Geometrie des Fahrrades angepasste Einheit aus erstem Teil 1, zweitem Teil 2 und Verbindungsmitteln 3 kann insbesondere durch das Arretierungsteil 11 gegen eine unbeabsichtigte Verstellung gesichert werden.

Nach Lösen des Arretierungsteils 11 kann der Radschützer jederzeit wieder an die Geometrie einer anderen Vorderradgabel angepasst werden.

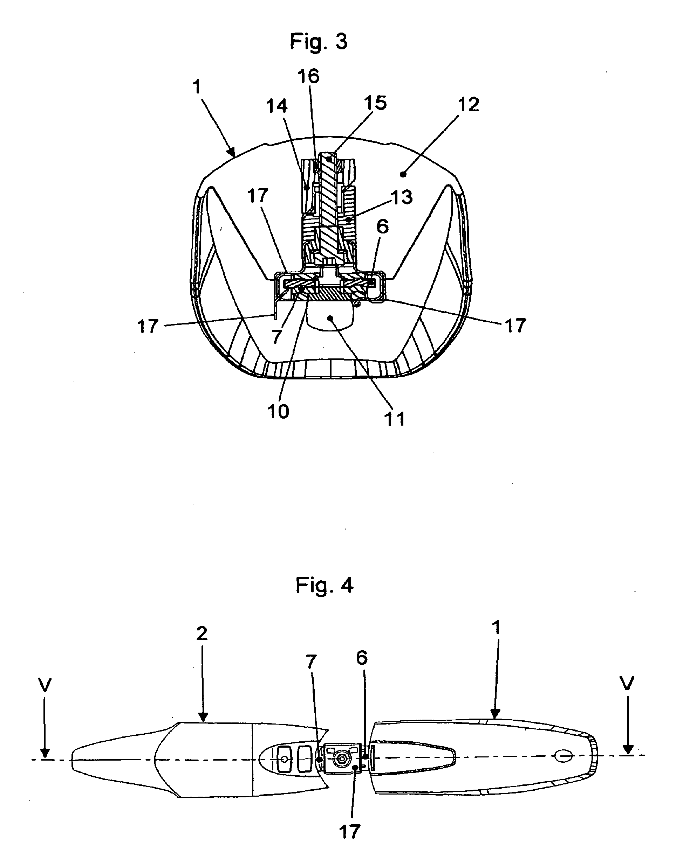

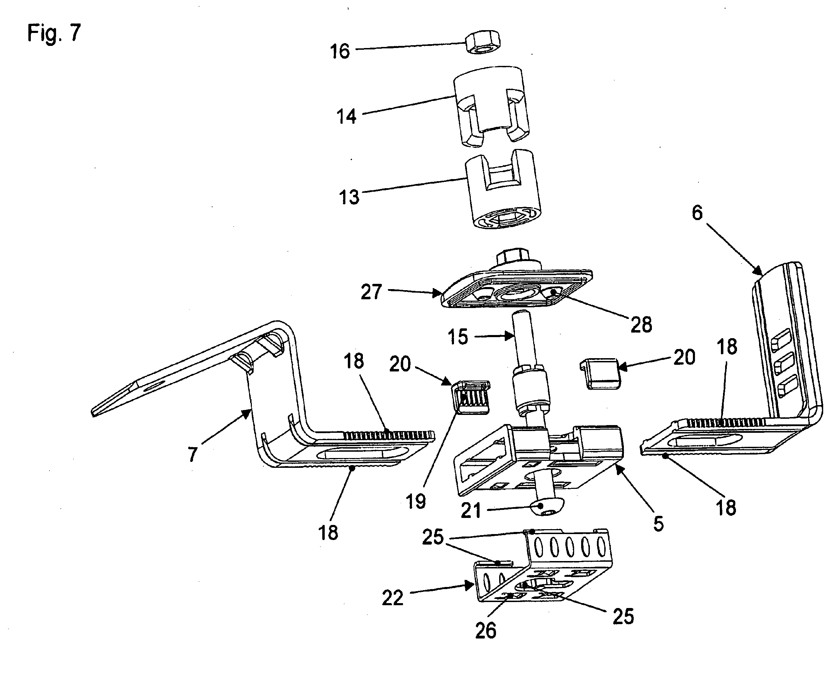

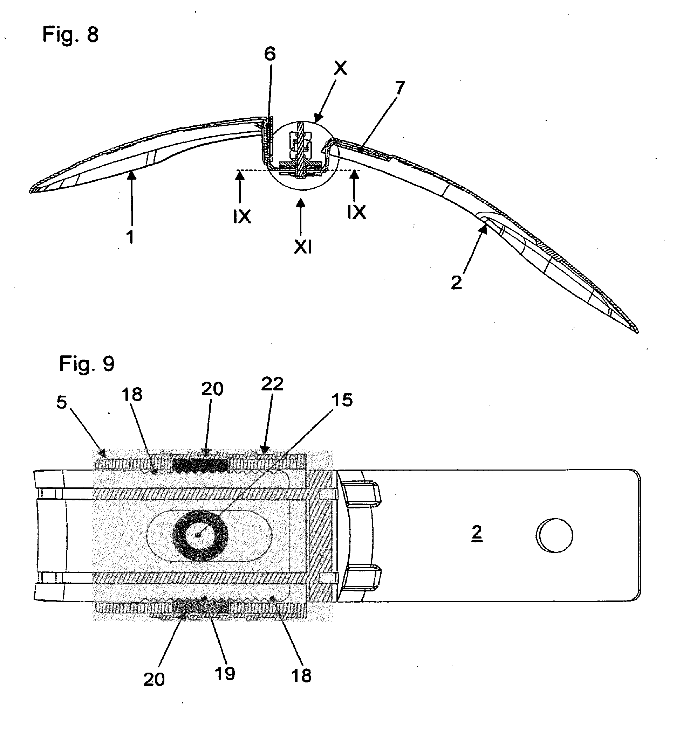

Bei der zweiten Ausführungsform gemäß den Fig. 7 bis Fig. 11 sind gleiche oder funktional gleiche Teile mit den gleichen Bezugszeichen versehen, wie bei der ersten Ausführungsform gemäß den Fig. 1 bis Fig. 6.

Die Arretierungsmittel der zweiten Ausführungsform unterscheiden sich von denen der ersten Ausführungsform. Bei der zweiten Ausführungsform sind nicht die Langlöcher der Befestigungsteile 6, 7 gezackt, sondern die äußeren Ränder der in das erste Verbindungsteil 5 einbringbaren Abschnitte der Befestigungsteile 6, 7 mit einer Außenverzahnung 18 versehen. In diese Außenverzahnungen 18 können die Verzahnungen 19 zweier Arretierungsteile 20 eingreifen, die die beiden Befestigungselemente 6, 7 aneinander und/oder an dem ersten Verbindungsteil 5 festlegen können, um damit den Radschützer gegen Verstellung zu sichern.

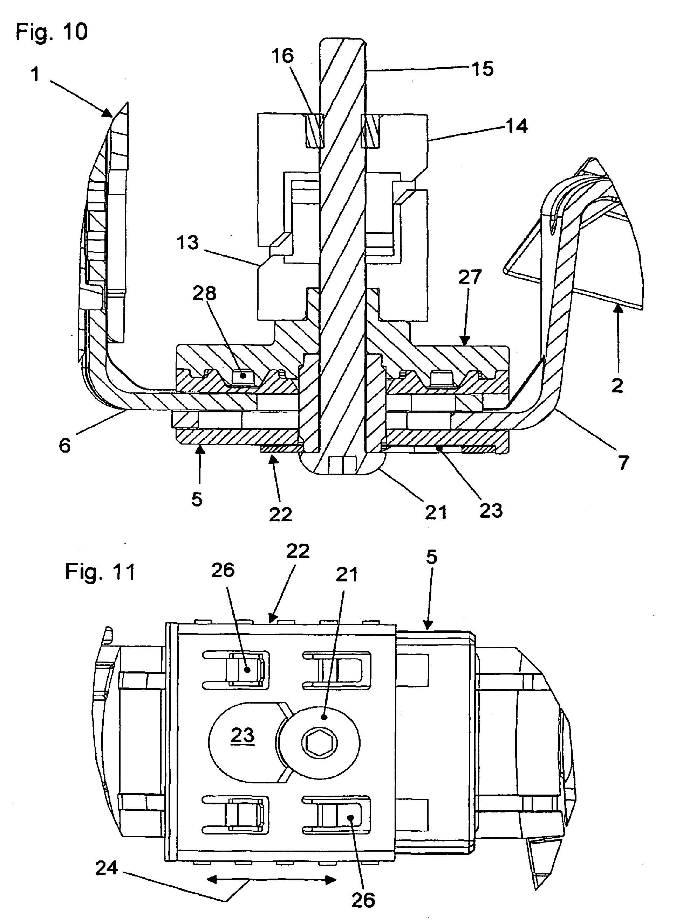

Weiterhin sind bei der zweiten Ausführungsform die Adaptermittel 4 verschieden von denen der ersten Ausführungsform. Dabei ist die Schraube 15 so gestaltet, dass sie durch das erste Verbindungsteil 5 hindurch ragt. An diesem Ende weist die Schraube 15 einen sich radial nach außen erstreckenden Kopf 21 auf. Weiterhin ist ein Verriegelungsteil 22 vorgesehen, das ein Schlüsselloch 23 aufweist. Das Verriegelungsteil 22 ist auf der in Gebrauchsstellung unteren Seite des ersten Verbindungsteils 5 angeordnet und in Längsrichtung des Radschützers beziehungsweise in Richtung des Pfeiles 24 in Fig. 11 verschiebbar. Das Verriegelungsteil 22 ist beispielsweise als C-förmiges Blech ausgebildet, dessen C-Schenkel 25 um das erste Verbindungsteil 5 teilweise herumgreifen. Auf der dem ersten Verbindungsteil 5 zugewandten Seite weist das Verriegelungsteil 22 vier Rastzungen 26 auf, die in der Verriegelungsstellung in entsprechende Ausnehmungen auf der dem Verriegelungsteil 22 zugewandten Außenseite des Verbindungsteils 5 eingreifen können. Es besteht die Möglichkeit nur eine oder zwei Rastzungen 26 vorzusehen oder auf die Rastzungen 26 völlig zu verzichten.

Das zweite Verbindungsteil 27 ist bei der zweiten Ausführungsform ebenfalls anders gestaltet als bei der ersten Ausführungsform. Es weist zwei dem ersten Verbindungsteil 5 zugewandte Vorsprünge 28 auf, die in entsprechende Ausnehmungen des ersten Verbindungsteils 5 eingreifen können.

Zur Verbindung der Adaptermittel 4 mit dem ersten Verbindungsteil 5 wird das erste Verbindungsteil 5 so von unten auf die Schraube 15 aufgeschoben, dass der Kopf 21 der Schraube 15 nach unten durch das erste Verbindungsteil 5 und das darunter angeordnete Verriegelungsteil 22 hindurch greift. In diesem Zustand greifen die Vorsprünge 28 in die Ausnehmungen des ersten Verbindungsteils 5 ein. Daran anschließend wird das Verriegelungsteil 22 so in Richtung des Pfeiles 24 nach links in Fig. 11 verschoben, dass der Schaft der Schraube 15 durch den schmaleren Teil des Schlüssellochs 23 hindurch ragt. Gleichzeitig rasten die Rastzungen 26 in die entsprechenden Ausnehmungen ein. Damit sind die Schraube 15 und damit die Adaptermittel 4 an dem ersten Verbindungsteil 5 festgelegt. Eine Verschiebung des Verriegelungsteils 22 in die entgegengesetzte Richtung löst die Verbindung zwischen der Schraube 15 beziehungsweise den Adaptermitteln 4 und dem ersten Verbindungsteil 5 in ebenso einfacher Weise.

## Patentansprüche

1. Radschützer für ein Fahrrad, umfassend
- mindestens ein erstes, vorderes Teil (1) des Radschützers,
- mindestens ein zweites, hinteres Teil (2) des Radschützers,
- Verbindungsmittel (3) für die mittelbare oder unmittelbare Verbindung des ersten und des zweiten Teils (1, 2 miteinander, wobei das erste und das zweite Teil (1, 2) derart in mindestens zwei unterschiedlichen Positionen relativ zueinander verbindbar sind, dass mindestens zwei unterschiedliche Geometrien des Radschützers realisierbar sind,
- Adaptermittel (4), über die der Radschützer an dem Fahrrad befestigt werden kann, wobei die Adaptermittel (4) lösbar mit dem ersten Teil (1) und/oder dem zweiten Teil (2) und/oder den Verbindungsmitteln (3) verbunden werden können, wobei der Radschützer Arretierungsmittel umfasst, die eine Arretierung der gewählten Relativpositionen des ersten und des zweiten Teils (1, 2) auch für den Fall ermöglichen, dass die Adaptermittel (4) von dem ersten Teil (1), dem zweiten Teil (2) und den Verbindungsmitteln (3) gelöst sind,
**dadurch gekennzeichnet, dass** die Verbindungsmittel (3) derart gestaltet sind, dass das erste und das zweite Teil (1, 2) in zwei zueinander senkrechten Richtungen relativ zueinander positionierbar sind, so dass der Radschützer sowohl in vertikaler Richtung als auch in Längsrichtung des Fahrrads an die Gegebenheiten des Fahrrads angepasst werden kann.

2. Radschützer nach Anspruch 1, **dadurch gekennzeichnet, dass** die Arretierungsmittel für die Arretierung mindestens ein Arretierungsteil (11, 20) umfassen, das insbesondere in mindestens eine Arretierungsöffnung (10) einbringbar ist.

3. Radschützer nach einem der Ansprüche 1 oder 2, **dadurch gekennzeichnet, dass** die Verbindungsmittel (3) erste Aufnahmemittel sowie ein erstes Befestigungselement (6) und/oder ein zweites Befestigungselement (7) umfassen, wobei in die ersten Aufnahmemittel das erste Befestigungselement (6) und/oder das zweite Befestigungselement (7) zumindest abschnittsweise einbringbar ist.

4. Radschützer nach Anspruch 3, **dadurch gekennzeichnet, dass** durch die Verbindung zwischen den ersten Aufnahmemitteln und dem ersten Befestigungselement (6) und/oder zwischen den ersten Aufnahmemitteln und dem zweiten Befestigungselement (7) eine Positionierung des ersten und des zweiten Teils (1, 2) in Richtung der Längserstreckung des Radschützers ermöglicht wird.

5. Radschützer nach einem der Ansprüche 1 bis 4, **dadurch gekennzeichnet, dass** die Verbindungsmittel (3) ein erstes Verbindungsteil (5) umfasst, über die das erste und das zweite Teil (1, 2) miteinander verbunden werden können.

6. Radschützer nach Anspruch 5, **dadurch gekennzeichnet, dass** an dem ersten Verbindungsteil (5) die ersten Aufnahmemittel ausgebildet sind.

7. Radschützer nach einem der Ansprüche 5 oder 6, **dadurch gekennzeichnet, dass** das erste Verbindungsteil (5) an gegenüberliegenden Seiten jeweils eine Aufnahme (8, 9) für das erste beziehungsweise das zweite Befestigungsteil (6, 7) aufweist.

8. Radschützer nach einem der Ansprüche 5 bis 7, **dadurch gekennzeichnet, dass** an dem ersten Verbindungsteil (5) die mindestens eine Arretierungsöffnung (10) ausgebildet ist.

9. Radschützer nach einem der Ansprüche 5 bis 8, **dadurch gekennzeichnet, dass** die Richtung, in der das mindestens eine Arretierungsteil (11, 20) in die mindestens eine Arretierungsöffnung (10) eingebracht werden kann, senkrecht zu der Richtung ist, in der das erste Befestigungselement (6) und/oder das zweite Befestigungselement (7) in die ersten Aufnahmemittel einbringbar sind.

10. Radschützer nach einem der Ansprüche 5 bis 9, **dadurch gekennzeichnet, dass** durch Einbringung des mindestens einen Arretierungsteils (11, 20) in die mindestens eine Arretierungsöffnung (10) das erste Befestigungselement (6) und/oder das zweite Befestigungselement (7) an dem ersten Verbindungsteil (5) und/oder aneinander festgelegt werden können.

11. Radschützer nach einem der Ansprüche 3 bis 10, **dadurch gekennzeichnet, dass** das erste Befestigungselement (6) mit dem ersten Teil (1) und/oder das zweite Befestigungselement (7) mit dem zweiten Teil (2) verbunden oder verbindbar ist.

12. Radschützer nach einem der Ansprüche 1 bis 11, **dadurch gekennzeichnet, dass** die Adaptermittel (4) Klemmmittel umfassen, die klemmend in dem Gabelrohr des Fahrrads befestigt werden können.

13. Radschützer nach einem der Ansprüche 1 bis 12, **dadurch gekennzeichnet, dass** die Adaptermittel (4) derart ausgebildet sind, das nach Lösen der Verbindung zwischen den Adaptermitteln (4) und dem ersten Teil (1) und/oder der Verbindung zwischen den Adaptermitteln (4) und dem zweiten Teil (2) und/oder der Verbindung zwischen den Adaptermitteln (4) und dem ersten Verbindungsteil (5) die Adaptermitteln (4) an dem Fahrrad verbleiben können.

## Claims

1. Mudguard for a bicycle, comprising
- at least a first, front part (1) of the mudguard,
- at least a second, rear part (2) of the mudguard,
- connection means (3) for directly or indirectly connecting the first and the second part (1, 2) to one another, wherein the first and the second part (1, 2) can be connected relative to one another in at least two different positions in such a way that at least two different geometries of the mudguard can be achieved,
- adapter means (4) via which the mudguard can be fastened to the bicycle, wherein the adapter means (4) can be connected releasably to the first part (1) and/or the second part (2) and/or the connection means (3), wherein the mudguard comprises locking means which allow the selected relative positions of the first and the second part (1, 2) to be locked even in the case that the adapter means (4) are released from the first part (1), the second part (2) and the connection means (3), **characterized in that** the connection means (3) are designed in such a way that the first and the second part (1, 2) can be positioned relative to one another in two mutually perpendicular directions, with the result that the mudguard can be adapted to the conditions of the bicycle both in the vertical direction and in the longitudinal direction of the bicycle.

2. Mudguard according to Claim 1, **characterized in that**, for locking purposes, the locking means comprise at least one locking part (11, 20) which can be introduced in particular into at least one locking opening (10).

3. Mudguard according to either of Claims 1 and 2, **characterized in that** the connection means (3) comprise first receiving means and a first fastening element (6) and/or a second fastening element (7), wherein the first fastening element (6) and/or the second fastening element (7) can at least partially be introduced into the first receiving means.

4. Mudguard according to Claim 3, **characterized in that** positioning of the first and the second part (1, 2) in the direction of the longitudinal extent of the mudguard is made possible by the connection between the first receiving means and the first fastening element (6) and/or between the first receiving means and the second fastening element (7).

5. Mudguard according to one of Claims 1 to 4, **characterized in that** the connection means (3) comprise a first connection part (5) via which the first and the second part (1, 2) can be connected to one another.

6. Mudguard according to Claim 5, **characterized in that** the first receiving means are formed on the first connection part (5).

7. Mudguard according to either of Claims 5 and 6, **characterized in that** the first connection part (5) has on opposite sides in each case a receptacle (8, 9) for the first or the second fastening part (6, 7).

8. Mudguard according to one of Claims 5 to 7, **characterized in that** the at least one locking opening (10) is formed on the first connection part (5).

9. Mudguard according to one of Claims 5 to 8, **characterized in that** the direction in which the at least one locking part (11, 20) can be introduced into the at least one locking opening (10) is perpendicular to the direction in which the first fastening element (6) and/or the second fastening element (7) can be introduced into the first receiving means.

10. Mudguard according to one of Claims 5 to 9, **characterized in that** the first fastening element (6) and/or the second fastening element (7) can be secured to the first connection part (5) and/or to one another by introducing the at least one locking part (11, 20) into the at least one locking opening (10).

11. Mudguard according to one of Claims 3 to 10, **characterized in that** the first fastening element (6) is connected or can be connected to the first part (1) and/or the second fastening element (7) is connected or can be connected to the second part (2).

12. Mudguard according to one of Claims 1 to 11, **characterized in that** the adapter means (4) comprise clamping means which can be fastened in a clamping manner in the fork tube of the bicycle.

13. Mudguard according to one of Claims 1 to 12, **characterized in that** the adapter means (4) are designed in such a way that the adapter means (4) can remain on the bicycle after releasing the connection between the adapter means (4) and the first part (1) and/or the connection between the adapter means (4) and the second part (2) and/or the connection between the adapter means (4) and the first connection part (5).

## Revendications

1. Garde-boue pour un vélo, comportant
- au moins une première partie avant (1) du garde-boue,
- au moins une deuxième partie arrière (2) du garde-boue,
- des moyens de liaison (3) pour la liaison indirecte ou directe l'une à l'autre de la première et de la deuxième partie (1, 2), la première et la deuxième partie (1, 2) pouvant être reliées dans au moins deux positions différentes l'une par rapport à l'autre, de telle sorte qu'au moins deux géométries différentes du garde-boue puissent être réalisées,
- des moyens d'adaptation (4), par le biais desquels le garde-boue peut être fixé au vélo, les moyens d'adaptation (4) pouvant être reliés de manière amovible à la première partie (1) et/ou à la deuxième partie (2) et/ou aux moyens de liaison (3), le garde-boue comportant des moyens de blocage qui permettent un blocage des positions relatives sélectionnées de la première et de la deuxième partie (1, 2) même dans le cas où les moyens d'adaptation (4) sont détachés de la première partie (1), de la deuxième partie (2) et des moyens de liaison (3),
**caractérisé en ce que** les moyens de liaison (3) sont conçus de telle sorte que la première et la deuxième partie (1, 2) puissent être positionnées l'une par rapport à l'autre dans deux directions perpendiculaires l'une à l'autre, de telle sorte que le garde-boue puisse être adapté aux conditions du vélo à la fois dans la direction verticale et dans la direction longitudinale du vélo.

2. Garde-boue selon la revendication 1, **caractérisé en ce que** les moyens de blocage comportent, pour le blocage, au moins une partie de blocage (11, 20) qui peut être introduite en particulier dans au moins une ouverture de blocage (10).

3. Garde-boue selon l'une quelconque des revendications 1 ou 2, **caractérisé en ce que** les moyens de liaison (3) comportent des premiers moyens de réception ainsi qu'un premier élément de fixation (6) et/ou un deuxième élément de fixation (7), le premier élément de fixation (6) et/ou le deuxième élément de fixation (7) pouvant être introduit(s) au moins partiellement dans les premiers moyens de réception.

4. Garde-boue selon la revendication 3, **caractérisé en ce qu'**un positionnement de la première et de la deuxième partie (1, 2) dans la direction de l'étendue longitudinale du garde-boue est rendu possible par la liaison entre les premiers moyens de réception et le premier élément de fixation (6) et/ou entre les premiers moyens de réception et le deuxième élément de fixation (7).

5. Garde-boue selon l'une quelconque des revendications 1 à 4, **caractérisé en ce que** les moyens de liaison (3) comportent une première partie de liaison (5), par le biais de laquelle la première et la deuxième partie (1, 2) peuvent être reliées l'une à l'autre.

6. Garde-boue selon la revendication 5, **caractérisé en ce que** les premiers moyens de réception sont réalisés sur la première partie de liaison (5).

7. Garde-boue selon l'une quelconque des revendications 5 ou 6, **caractérisé en ce que** la première partie de liaison (5) comprend sur des côtés opposés à chaque fois un logement (8, 9) pour la première ou la deuxième partie de fixation (6, 7).

8. Garde-boue selon l'une quelconque des revendications 5 à 7, **caractérisé en ce que** l'au moins une ouverture de blocage (10) est réalisée sur la première partie de liaison (5).

9. Garde-boue selon l'une quelconque des revendications 5 à 8, **caractérisé en ce que** la direction dans laquelle l'au moins une partie de blocage (11, 20) peut être introduite dans l'au moins une ouverture de blocage (10) est perpendiculaire à la direction dans laquelle le premier élément de fixation (6) et/ou le deuxième élément de fixation (7) peu(ven)t être introduit(s) dans les premiers moyens de réception.

10. Garde-boue selon l'une quelconque des revendications 5 à 9, **caractérisé en ce que** le premier élément de fixation (6) et/ou le deuxième élément de fixation (7) peu(ven)t être fixé(s) à la première partie de liaison (5) et/ou l'un à l'autre par l'introduction de l'au moins une partie de blocage (11, 20) dans l'au moins une ouverture de blocage (10).

11. Garde-boue selon l'une quelconque des revendications 3 à 10, **caractérisé en ce que** le premier élément de fixation (6) est relié ou peut être relié à la première partie (1) et/ou le deuxième élément de fixation (7) est relié ou peut être relié à la deuxième partie (2).

12. Garde-boue selon l'une quelconque des revendications 1 à 11, **caractérisé en ce que** les moyens d'adaptation (4) comportent des moyens de serrage qui peuvent être fixés par serrage dans le tube de fourche du vélo.

13. Garde-boue selon l'une quelconque des revendications 1 à 12, **caractérisé en ce que** les moyens d'adaptation (4) sont réalisés de telle sorte qu'après le détachement de la liaison entre les moyens d'adaptation (4) et la première partie (1) et/ou de la liaison entre les moyens d'adaptation (4) et la deuxième partie (2) et/ou de la liaison entre les moyens d'adaptation (4) et la première partie de liaison (5), les moyens d'adaptation (4) puissent demeurer sur le vélo.
